# FASCICULE DE BREVET EUROPEEN

(11) **EP 1 662 955 B1**
(45) Date de publication et mention de la délivrance du brevet: **04.03.2009**
(21) Numéro de dépôt: 04767720.8
(22) Date de dépôt: 16.07.2004
(51) Int. Cl.: A47J 42/08, B02C 2/10

(54) **DISPOSITIF DE REGLAGE EN CONTINU DE LA MOUTURE DE CONDIMENTS DANS UN MOULIN**
VORRICHTUNG ZUR KONTINUIERLICHEN STEUERUNG VON IN EINER MÜHLE GEMAHLENEN WÜRZMITTELN
DEVICE FOR CONTINUOUSLY CONTROLLING CONDIMENTS GRINDING IN A MILL

(30) Priorité: 21.07.2003 FR 0308962; 03.03.2004 FR 0402299
(43) Date de publication de la demande: 07.06.2006
(73) Titulaire: PSP Industries SAS, 25440 Quingey (FR)
(72) Inventeur: FORNAGE, Jean-Claude, F-25000 Besançon (FR)
(74) Mandataire: Poupon, Michel
(86) Numéro de dépôt international: PCT/FR2004/001896
(87) Numéro de publication internationale: WO 2005/009187

(56) Documents cités:
- CH-A- 351 726
- DE-C- 3 632 688
- US-A1- 2002 145 065

## Description

La présente invention a pour objet un dispositif de réglage en continu de la mouture de condiments dans un moulin, comme le sel, le poivre ou toute autre épice.

On connaît déjà ce type de dispositif dans l'art antérieur, dans lequel le réglage de la mouture est réalisé par une modification du positionnement d'un élément du mécanisme de mouture du moulin à condiments, permettant d'avoir une mouture par palier.

Dans ce type de dispositif de l'art antérieur, lors du réglage de la mouture, l'opérateur est en contact avec le condiment, entraînant un risque de contamination du produit.

Ce type de dispositif ne permet pas non plus d'adapter ce réglage sur les moulins à condiments électriques dans la mesure où il doit être positionné dans la zone de sortie des condiments.

Il faut également souligner que le dispositif de réglage de la mouture est dépendant du corps du moulin à condiments, ce qui nécessite de changer l'ensemble en cas de détérioration du dispositif de réglage.

Un dispositif de réglage similaire est connu du document CH 351736 A.

L'invention se propose de remédier à ces divers inconvénients en proposant un dispositif de réglage de la mouture d'un condiment dans un moulin, permettant d'avoir un réglage de mouture continue, évitant le contact de l'utilisateur avec le produit à moudre, et permettant de régler la finesse de la mouture.

A cet effet, la présente invention a pour objet un dispositif de réglage de la mouture d'un condiment comme défini dans la revendication 1.

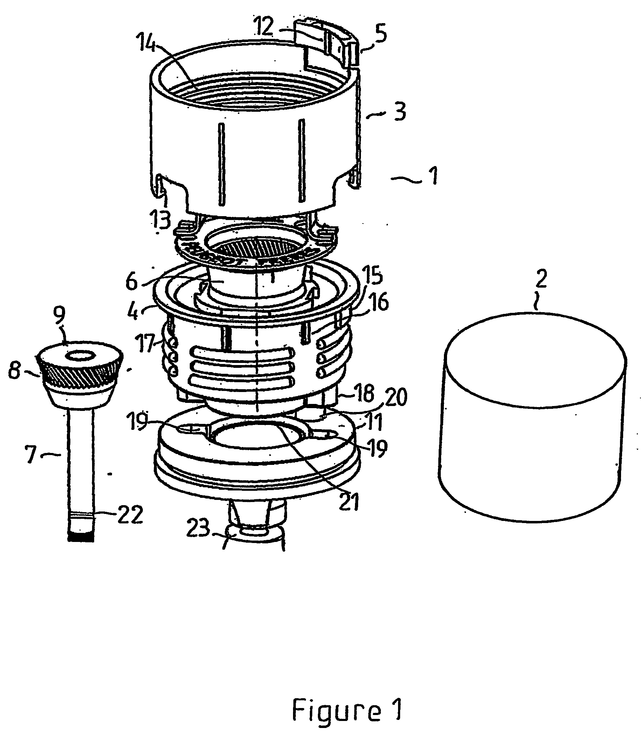

On comprendra mieux l'invention à l'aide de la description faite ci-après en référence au dessin annexé sur lequel la figure représente une vue éclatée du dispositif de réglage de la mouture avant son insertion sur l'axe d'entraînement du moulin à condiments.

Le dispositif 1 selon l'invention est constitué d'une bague de réglage 3, pourvue d'une butée de réglage 5, d'une cuvette 6, d'une pièce support cuvette 4, d'une bague d'accrochage 11 et d'un axe d'entraînement 7 surmonté d'une poire 9.

La partie supérieure du dispositif 1 selon l'invention est constituée d'une bague de réglage 3 présentant un mouvement de rotation lors de son utilisation. Sur sa partie supérieure, cette bague de réglage 3 est pourvue d'une butée de réglage 5 avec un doigt d'indexage 12.

Ce doigt d'indexage 12 permet d'obtenir un réglage de la mouture correspondant à des tailles bien particulières. Cependant, le réglage de la mouture peut également être réalisé sensitivement, c'est-à-dire sur toute la bague de réglage et pas seulement au niveau des encoches prévues à cet effet.

La partie inférieure de la bague de réglage 3 est munie de clips de fixation 13 permettant l'accrochage de la bague de réglage 3 avec la bague d'accrochage 11. Ces clips 13 auront préférentiellement la forme d'ergots en plastique.

La partie interne de cette bague de réglage 3 est munie d'un filetage 14 assurant sa fixation avec la pièce support cuvette 4.

Le doigt 12 de la butée de réglage 5 assure l'indexage de la bague de réglage 3 par rapport à la pièce support cuvette 4, permettant ainsi de régler la finesse de la mouture.

La cuvette 6 est fixée sur la pièce support cuvette 4, définissant en rotation des positions relatives spécifiques.

La pièce support cuvette 4 est pourvue d'un renfort 15 venant en contact avec la butée de réglage 5 de la bague de réglage 3 en fin de course avant et arrière. Il est situé au même niveau que les encoches 16 recevant le doigt d'indexage 12, sur la face supérieure externe du support cuvette 4.

La pièce support cuvette 4 possède également cinq encoches 16 destinées à recevoir le doigt d'indexage 12. Elle permet donc d'obtenir cinq positions indexées, mais les positions intermédiaires restent possibles, permettant ainsi d'avoir une grande variété de taille de mouture.

La pièce support cuvette 4 est munie sur sa face extérieure d'un filetage 17 permettant son insertion avec la bague de réglage 3. Ce filetage 17 est régulièrement interrompu afin d'éviter toute obstruction du mécanisme 1 selon l'invention en cas de pénétration du condiment.

Sur sa partie inférieure, la pièce support cuvette 4 est munie de colonnes de vissage 18, permettant la fixation de la cuvette 6 en évitant la rotation de cette dernière dans la bague d'accrochage 11, créant une liaison glissière.

Cette rondelle 2 a uniquement un rôle décoratif. Elle peut présenter diverses ornementations.

La bague d'accrochage 11 se plaçant sous la pièce support cuvette 4 est pourvue de deux logements 19 permettant la réception des colonnes de fixation 20 du support cuvette 4. Ces logements 19 bloquent également la rotation de la pièce support cuvette 4. La partie supérieure interne de la bague d'accrochage 11 est munie d'une collerette de protection 21, évitant les projections de condiment à l'intérieur du mécanisme.

L'axe d'entraînement 7 du moulin à condiments, muni à son extrémité supérieure de ressorts de maintien 8 et d'une poire 9, est ensuite inséré dans l'ensemble formé par la bague d'accrochage 11, la cuvette 6, la pièce support cuvette 4 et la bague de réglage 3. La poire 9 se trouve ainsi bloquée dans la pièce support 4 cuvette et la cuvette 6. Le ressort 8 peut être remplacé par une entretoise en matière plastique pour les mouvements « sel » afin d'éviter tout risque de corrosion.

L'axe d'entraînement 7 est pourvu d'un moletage 22 assurant sa fixation avec la bague d'assemblage 23.

La bague d'assemblage 23 se positionne sous la bague d'accrochage 11. Elle se monte en force sur l'axe d'entraînement 7 où elle s'agrippe sur le moletage 22.

Le réservoir 24 se fixe au niveau de la bague d'accrochage 11.

La bague de réglage 3 se visse sur la pièce support cuvette 4. Par un mouvement de fixation par pince formant ressort, elle se clippe sur la bague d'accrochage 11.

La cuvette 6 est ainsi intercalée entre la bague de réglage 3 et la pièce support cuvette 4.

Ainsi, la rotation de la bague de réglage 3 entraînera un mouvement vertical de la pièce support cuvette 4.

Ce mouvement sera limité à la fois par la butée 5 et le renfort 15. Il pourra être d'une amplitude maximale de 3 mm, faisant ainsi varier la finesse de la mouture.

Par contre, la position verticale de la poire 9 est fixe. Elle est maintenue dans le sens vertical à l'aide de la butée-étrier sous laquelle sont positionnés des circlips. La butée-étrier peut être fixée soit sur la rondelle de fixation, soit directement sur le corps du moulin à condiments (non représenté).

Comme la pièce support cuvette 4 ne peut pas entrer en rotation, elle ne pourra pas être entraînée par le mouvement de rotation de la poire 9, évitant ainsi d'éventuels déréglages.

Le dispositif de réglage de la mouture selon l'invention modifie la position entre la poire et la cuvette, en faisant se déplacer la cuvette, et non pas la poire comme cela se fait habituellement.

Ce dispositif de réglage permet d'avoir une mouture en continu. De plus, il est indépendant du fonctionnement du reste du moulin, ce qui permet une grande adaptabilité sur différents types de moulins, qu'ils soient manuels ou électriques, grâce à une pièce d'adaptation.

La bague de réglage peut recevoir un décor permettant de s'adapter aux différents modèles de moulin à condiments, qui peuvent être constitués de bois ou d'inox, par exemple.

Par ailleurs, ce type de dispositif de réglage de la mouture peut s'adapter aussi bien sur des moulins à poivre que sur des appareillages différents, de par sa géométrie et sa compacité.

De plus, le système de réglage selon l'invention permet de réduire les coûts de production dans la mesure où il est composé d'un nombre réduit d'éléments.

Bien que l'invention ait été décrite avec des moyens de réalisation particuliers, elle comprend tous les équivalents techniques des moyens décrits.

## Revendications

1. Dispositif de réglage de la mouture d'un condiment pour un moulin constitué d'un élément moteur comprenant une cuvette 6, une pièce de support 4 de cette cuvette, une poire 9 et une rondelle de fixation 11 sur le moulin, **caractérisé en ce que** le mouvement de rotation d'une bague de réglage 3, munie d'une butée de réglage 5, entraîne un mouvement de translation de ladite pièce support cuvette 4, ce dernier mouvement étant limité à la fois par la butée 5 et un renfort 15 disposé sur la face supérieure externe de la pièce support cuvette 4.

2. Dispositif de réglage de la mouture d'un condiment selon la revendication 1 pour un moulin, **caractérisé en ce que** ladite bague de réglage 3 est pourvue d'un filetage interne 14.

3. Dispositif de réglage de la mouture d'un condiment selon l'une des revendications précédentes pour un moulin, **caractérisé en ce que** ladite bague de réglage 3 vient se clipper sur ladite rondelle de fixation 11 grâce à des ergots en plastique 13.

4. Dispositif de réglage de la mouture d'un condiment selon l'une des revendications précédentes pour un moulin, **caractérisé en ce que** ladite butée de réglage 5 de ladite bague de réglage 3 est pourvue d'un doigt 12 indexant la bague de réglage 3, ainsi que d'un système de réglage sensitif.

5. Dispositif de réglage de la mouture d'un condiment selon l'une des revendications précédentes pour un moulin, **caractérisé en ce que** la pièce support cuvette 4 est pourvue d'encoches 16 destinées à recevoir le doigt d'indexage 12 de la dite butée de réglage 5 de ladite bague de réglage 3.

6. Dispositif de réglage de la mouture d'un condiment selon l'une des revendications précédentes pour un moulin, **caractérisé en ce que** ladite pièce support cuvette 4 comprend un filetage externe 17, régulièrement interrompu.

7. Dispositif de réglage de la mouture d'un condiment selon l'une des revendications précédentes pour un moulin, **caractérisé en ce que** la pièce support cuvette 4 est munie de colonnes de vissage 18 à son extrémité inférieure.

8. Dispositif de réglage de la mouture d'un condiment selon les revendications précédentes pour un moulin, **caractérisé en ce que** la position de ladite poire 9 est maintenue par la butée-étrier.

9. Dispositif de réglage de la mouture d'un condiment selon les revendications précédentes pour un moulin, **caractérisé en ce que** ladite butée-étrier est maintenue par des circlips et des ressorts.

10. Dispositif de réglage de la mouture d'un condiment selon l'une des revendications précédentes pour un moulin, **caractérisé en ce que** la course de mouvement de ladite bague de réglage 3 sur ladite pièce support cuvette 4 est de 3 mm.

11. Dispositif de réglage de la mouture d'un condiment selon l'une des revendications précédentes pour un moulin, **caractérisé en ce que** la bague d'accrochage 11 est munie d'une collerette de protection 21 sur sa partie supérieure interne.

12. Dispositif de réglage de la mouture d'un condiment selon l'une des revendications précédentes pour un moulin, **caractérisé en ce que** le pas ou l'angle de la butée 5 est variable.

## Claims

1. Device for controlling the grinding of a condiment for a mill consisting of a motor element comprising a cup 6, a support part 4 for said cup, a cone 9 and a washer 11 for securing onto the mill, **characterized in that** the rotational movement of a control ring 3 provided with a control stop 5, drives a translatory movement of said cup support part 4, the latter movement being limited both by the stop 5 and a reinforcement 15 arranged on the upper external face of the cup support part 4.

2. Device for controlling the grinding of a condiment according to claim 1 for a mill, **characterized in that** the said control ring 3 is provided with an internal thread 14.

3. Device for controlling the grinding of a condiment according to one of the preceding claims for a mill, **characterized in that** the said control ring 3 clips onto the said securing washer 11 by means of plastic lugs 13.

4. Device for controlling the grinding of a condiment according to one of the preceding claims for a mill, **characterized in that** the said control stop 5 of the said control ring 3 is provided with a finger 12 indexing the control ring 3, as well as a sensitive control system.

5. Device for controlling the grinding of a condiment according to one of the preceding claims for a mill, **characterized in that** the cup support part 4 is provided with notches 16 intended to receive the indexing finger 12 of the said control stop 5 of the said control ring 3.

6. Device for controlling the grinding of a condiment according to one of the preceding claims for a mill, **characterized in that** the said cup support part 4 comprises an external thread 17, which is interrupted at regular intervals.

7. Device for controlling the grinding of a condiment according to one of the preceding claims for a mill, **characterized in that** the cup support part 4 is provided with screw columns 18 at its lower end.

8. Device for controlling the grinding of a condiment according to the preceding claims for a mill, **characterized in that** the position of said cone 9 is maintained by the stop bracket.

9. Device for controlling the grinding of a condiment according to the preceding claims for a mill, **characterized in that** the said stop bracket is maintained by circlips and springs.

10. Device for controlling the grinding of a condiment according to one of the preceding claims for a mill, **characterized in that** the movement path of the said control ring 3 on the said cup support part 4 is 3 mm.

11. Device for controlling the grinding of a condiment according to one of the preceding claims for a mill, **characterized in that** the attachment ring 11 is provided with a protection collar 21 on its upper internal part.

12. Device for controlling the grinding of a condiment according to one of the preceding claims for a mill, **characterized in that** the pitch or the angle of the stop 5 is variable.

## Patentansprüche

1. Einstellungsvorrichtung für die Zermahlung eines Würzmittels für eine Mühle, die über ein Motorelement verfügt, das eine Schale 6, ein Trägerteil 4 für diese Schale, ein Kegelmahlteil 9 und eine Befestigungsscheibe 11 auf der Mühle aufweist, **dadurch gekennzeichnet, dass** die Drehbewegung eines Einstellrings 3, der mit einem Einstellanschlag 5 ausgestattet ist und eine Translationsbewegung des Schalenträgerteils 4 bewirkt, wobei letztere Bewegung sowohl durch den Anschlag 5 als auch durch eine auf der oberen Außenfläche des Schalenträgerteils 4 angeordnete Verstärkung 15 begrenzt wird.

2. Einstellungsvorrichtung für die Zermahlung eines Würzmittels für eine Mühle nach Anspruch 1, **dadurch gekennzeichnet, dass** der Einstellring 3 mit einem Innengewinde 14 versehen ist.

3. Einstellungsvorrichtung für die Zermahlung eines Würzmittels für eine Mühle nach einem der vorangehenden Ansprüche, **dadurch gekennzeichnet, dass** der Einstellring 3 sich durch Plastiknasen 13 auf die oben genannte Befestigungsscheibe 11 stecken lässt.

4. Einstellungsvorrichtung für die Zermahlung eines Würzmittels für eine Mühle nach einem der vorangehenden Ansprüche, **dadurch gekennzeichnet, dass** der Einstellanschlag 5 des Einstellrings 3 mit einem Finger 12 zum Schalten des Einstellrings 3 sowie mit einem Feineinstellsystem ausgestattet ist.

5. Einstellungsvorrichtung für die Zermahlung eines Würzmittels für eine Mühle nach einem der vorangehenden Ansprüche, **dadurch gekennzeichnet, dass** das Schalenträgerteil 4 mit Nuten 16 versehen ist, die zur Aufnahme des Schaltfingers 12 des Einstellanschlags 5 des Einstellrings 3 vorgesehen sind.

6. Einstellungsvorrichtung für die Zermahlung eines Würzmittels für eine Mühle nach einem der vorangehenden Ansprüche, **dadurch gekennzeichnet, dass** das Schalenträgerteil 4 über ein regelmäßig unterbrochenes Außengewinde 17 verfügt.

7. Einstellungsvorrichtung für die Zermahlung eines Würzmittels für eine Mühle nach einem der vorangehenden Ansprüche, **dadurch gekennzeichnet, dass** das Schalenträgerteil 4 an seinem unteren Ende mit Schraubverbindungszapfen 18 versehen ist.

8. Einstellungsvorrichtung für die Zermahlung eines Würzmittels für eine Mühle nach einem der vorangehenden Ansprüche, **dadurch gekennzeichnet, dass** die Stellung des oben genannten Kegelmahlteils 9 durch den Anschlagbügel gehalten wird.

9. Einstellungsvorrichtung für die Zermahlung eines Würzmittels für eine Mühle nach einem der vorangehenden Ansprüche, **dadurch gekennzeichnet, dass** der Anschlagbügel durch Sicherungsringe und Federn gehalten wird.

10. Einstellungsvorrichtung für die Zermahlung eines Würzmittels für eine Mühle nach einem der vorangehenden Ansprüche, **dadurch gekennzeichnet, dass** der Bewegungsweg des Einstellrings 3 auf dem Schalenträgerteil 4 bei 3 mm liegt.

11. Einstellungsvorrichtung für die Zermahlung eines Würzmittels für eine Mühle nach einem der vorangehenden Ansprüche, **dadurch gekennzeichnet, dass** der Befestigungsring 11 auf seiner oberen Innenseite mit einem Schutzkragen 21 versehen ist.

12. Einstellungsvorrichtung für die Zermahlung eines Würzmittels für eine Mühle nach einem der vorangehenden Ansprüche, **dadurch gekennzeichnet, dass** der Abstand oder der Winkel des Anschlags 5 variabel ist.
